# NOUVEAU FASCICULE DE BREVET EUROPEEN

(11) **EP 0 791 153 B2**
(45) Date de publication et mention de la décision concernant l'opposition: **06.09.2006**
(45) Mention de la délivrance du brevet: 20.03.2002
(21) Numéro de dépôt: 95939310.9
(22) Date de dépôt: 02.11.1995
(51) Int. Cl.: F16L 11/04, F16L 13/02, F16L 58/10

(54) **CANALISATIONS A BASE DE POLYAMIDE ET DE POLYOLEFINE POUR LE TRANSPORT**
ROHRLEITUNGEN AUS POLYAMID UND POLYOLEFIN ZUM GASTRANSPORT
POLYAMIDE- AND POLYOLEFIN-BASED DUCTS FOR TRANSPORTING

(30) Priorité: 02.11.1994 FR 9413070
(43) Date de publication de la demande: 27.08.1997
(73) Titulaire: Arkema France, 92800 Puteaux (FR)
(72) Inventeur: BEAL, Jean-Luc, F-78960 Voisins-le-Bretonneux (FR); DANG, Patrick, F-27300 Bernay (FR); DENIZART, Olivier, F-69390 Millery (FR)
(86) Numéro de dépôt international: PCT/FR1995/001436
(87) Numéro de publication internationale: WO 1996/014531

(56) Documents cités:
- EP-A- 0 618 391
- EP-A- 0 638 749
- WO-A-93/09948
- WO-A-94/18485
- DE-A- 1 504 886
- DE-A- 2 125 575
- DE-A- 3 439 312
- DE-A- 3 715 251
- FR-A- 2 564 938
- FR-A- 2 701 303
- GB-A- 2 038 444
- US-A- 3 561 493
- Technische Thermoplaste, Polyamide, Kunststoff Handbuch 3/4, (1998), Dr. Ludwig Bottenbruch und Dr. Rudolf Binsach (Herausgeber), S. 138, 145, 162
- Angew. Makromol. Chem., 162, S. 53-68 (1988)
- Preliminary Design Concepts for an Advanced Gas Distribution System, Report (1991), GRI-91/0029, Order No. PB 91-178939; Chemical Abstracts 116 : 195742n

## Description

### DOMAINE TECHNIQUE

La présente invention concerne l'utilisation de canalisations à base de polyamide (PA) et de polyoléfine (PO) pour la distribution de gaz combustibles tels que le gaz naturel, air propané et de préférence le gaz naturel et plus précisément des canalisations comprenant au moins une couche de polyamide et au moins une couche de polyéthylène. Ces canalisations sont utiles pour les réseaux de distribution moyenne et basse pressions, i-e entre 2 kPa et 1 MPa, qui distribuent le gaz chez les particuliers et dans les immeubles collectifs.

### TECHNIQUE ANTERIEURE

Pour cet usage, on connaît des canalisations en polyamide (PA) principalement en PA-11, ainsi que des canalisations en polyéthylène moyenne et haute densité de type MRS80 (PE80) et MRS100 (PE100) au sens de la norme ISO/DIS12162 - "Matériaux thermoplastiques pour applications canalisations et raccords - Classification & Désignation". Ces canalisations en résine thermoplastique sont utilisées soit pour installer de nouveaux réseaux de distribution, soit pour réhabiliter des réseaux existants constitués de canalisations métalliques (acier et fonte) en insérant ces canalisations thermoplastiques à l'intérieur des canalisations métalliques déjà implantées, soit encore pour remplacer tout ou partie des canalisations thermoplastiques insérées dans les canalisations métalliques.

Certaines des propriétés mécaniques du PA sont supérieures à celles du PE, parmi lesquelles on peut citer le module élastique et la contrainte au seuil, la contrainte d'éclatement instantanée, la déformation au seuil et la limite élastique en déformation, la tenue au fluage sous contrainte et la tenue en température. Par contre, la tenue au choc du PA est inférieure à celle du PE.

Outre les propriétés mécaniques indiquées ci-dessus et notamment la tenue au fluage, trois autres paramètres importants sont à considérer, à savoir la pression d'éclatement à long terme, l'aptitude à l'enroulement ou enroulabilité (paramètre important lors du stockage et du transport de la canalisation) et la résistance chimique.

La pression d'éclatement à long terme d'une canalisation étant corrélée aux propriétés en traction de ses matériaux constitutifs, à sa tenue au fluage, celle du PA est supérieure à celle du PE (pour des configurations de canalisations identiques). Pourdes canalisations de transport et/ou de distribution de gaz, cette propriété est mesurée pour une durée de vie minimale de 50 ans. On mesure la contrainte à 50 ans appelée LTHS (Long Term Hydrostatic Strength) et la contrainte minimum à 50 ans appelée MRS (Minimum Required Strength) suivant les normes ISO/DTR9080 et AS 2943 et 2944.

En fonction de la pression d'éclatement du matériau constitutif de la canalisation, de la pression de service de la canalisation (et d'un facteur de sécurité), on peut dimensionner chaque canalisation. SI l'on considère 2 canalisations (l'une en PA, l'autre en PE) de diamètre externe égal, le SDR (Standard Dimensionnal Ratio = diamètre extérieur / épaisseur) de la canalisation en PA est supérieur à celui de la canalisation en PE. Ainsi, pour une pression de service de 300 kPa (avec un facteur de sécurité de 3), le SDR de la canalisation en PE80 est égal à 17,6 alors que celui de la canalisation en PA-11 Jaune est de 33.

Pour apprécier l'aptitude à l'enroulement ou enroulabilité d'une canalisation, on lui impose une déformation tendant à l'ovaliser. Cette déformation dépend non seulement de la géométrie de la canalisation, du diamètre de l'axe d'enroulement mais aussi des propriétés élastiques du matériau (en effet, si l'on veut qu'une fois déroulée la canalisation redevienne circulaire, Il ne faut pas qu'il y ait de déformation plastique).

Les canalisations en PA sont supérieures aux canalisations en PE lorsque l'on tient compte de la contrainte élastique limite de chacun des deux matériaux ainsi que de leurs diamètres minimum d'enroulement.

Dans le tableau ci-dessous est indiqué le diamètre d'enroulement minimum pour des canalisations de diamètres externes (ou extérieurs) et internes (ou intérieurs) divers en PA-11 Jaune de SDR =17 d'une part et en PE80 (FINATHENE® PE3802) de SDR=11 d'autre part.

| Nature canalisation | Ø EXTERNE (mm) | EPAISSEUR (mm) | Ø INTERNE (mm) | Ø D'ENROULEMENT (mm) |
|---|---|---|---|---|
| PA-11 | 29,5 | 1,75 | 26 | 1400 |
| PA-11 | 37 | 2,2 | 32,6 | 1500 |
| PA-11 | 58,2 | 3,4 | 51,4 | 6000 |
| PE80 | 32 | 3 | 26 | 650 |
| PE80 | 40 | 3,7 | 32,6 | 800 |
| PE80 | 63 | 5,8 | 51,4 | 1300 |

Les canalisations en PA plus résistantes que celles en PE nécessitent moins de matière, mais elles s'enroulent mal. Elles sont particulièrement adaptées pour les portions rectilignes, par contre il faut plus de raccords pour les portions non rectilignes. Mais lorsque le diamètre extérieur de la canalisation est imposé, par exemple dans le cas où elle doit être insérée à l'intérieur des canalisations métalliques d'un réseau existant, le diamètre intérieur d'une canalisation en PA pour le passage du gaz sera plus important que celui d'une canalisation en PE.

La résistance chimique du PA, en particulier du PA-11, aux composés hydrocarbonés aromatiques, chlorés et aux acides et bases est supérieure à celle du PE. A titre d'exemple la résistance comparée du PA-11 Jaune et du PE80 en immersion dans une solution synthétique de condensats de gaz naturels (mélange benzène/toluéne/xylène/cyclohexane/kérosène/styrène 10/20/25/25/10/10 proportions en volume) pendant 72 heures donne les résultats suivants :

| | PA-11 | PE80 |
|---|---|---|
| Augmentation masse (%) | 7,2 | 7,5 |
| Augmentation longueur (%) | 0,9 | 2,5 |
| Augmentation diamètre (%) | 0,5 | 2,4 |
| Variation de la résistance à la pression (%) | -10,4 | -30,1 |

Le brevet FR 2701303 décrit des tuyaux pour transporter le carburant des automobiles. Il est constitué d'une couche intérieure en polyéthylène haute densité, d'une couche de liant et d'une couche extérieure en polyamide.

Le brevet US 3561493 décrit des tubes ayant une couche intérieure en polyamide et une couche extérieure en polyéthylène. Aucune utilisation de ces tubes n'est décrite.

Le brevet DE 4214383 décrit des tubes ayant des couches de polyamide, de polyoléfine et nécessairement une couche de polyester.

### EXPOSE DE L'INVENTION

La demanderesse a utilisé pour le transport et/ou la distribution de gaz, des canalisation qui présentent simultanément les avantages du PA et du PE sans présenter les inconvénients de ces deux matériaux. Un avantage des canalisations mises en oeuvre selon l'invention est d'assurer un bon compromis entre la résistance à la pression apportée par la couche de PA et la facilité d'enroulement apportée par la couche de PE.

L'invention concerne l'utilisation de canalisations constituées soit d'une couche intérieure de PO, de préférence de PE, et d'une couche extérieure en PA ou en mélange de PA et PO à matrice PA, soit d'une couche extérieure de PO, de préférence de PE, et comprenant une couche intérieure en PA ou en mélange de PA et PO à matrice PA soit successivement d'une couche intérieure en PA ou en mélange de PA et PO à matrice PA, d'une couche en PO et d'une couche extérieure en PA ou en mélange de PA et PO à matrice PA pour constituer des réseaux de distribution et/ou de transport de gaz combustibles de moyenne et/ou basse pression.

Selon une forme avantageuse une couche de liant est disposée entre la couche de PO et chaque couche de PA ou de mélange PA et PO à matrice PA.

Selon une autre forme avantageuse la couche de PO et/ou une ou chaque couche adjacente de PA ou de mélange PA et PO à matrice PA contient un produit permettant l'adhésion des couches entre elles.

Par polyoléfine ou PO, on entend les homo- et copolymères de l'éthylène, par exemple les copolymères de l'éthylène et d'autres α-oléfines, les copolymères de l'éthylène et d'un ou plusieurs esters d'acides carboxyliques insaturés tels que les (méth)acrylates d'alkyle ou les copolymères de l'éthylène et des dérivés vinyliques d'acides carboxyliques saturés tels que l'acétate de vinyle (plus brièvement PE), le polypropylène, seuls ou en mélange et éventuellement réticulés par des peroxydes ou des silanes. Parmi les PO préférés, on peut citer le PE tel que défini ci-dessus et plus particulièrement les copolymères d'éthylène et de butène et les copolymères d'éthylène et d'hexène tels que le FINATHENE® PE3802 noir et respectivement le ELTEX® TU B 121 notamment à cause de leurs propriétés de résistance en pression à long terme et de résistance à la propagation de fissure.

L'épaisseur de la couche de PO dépend des contraintes mécaniques et peut en général varier de 0,5 mm à 30 mm pour des canalisations de diamètre extérieur jusqu'à 300 mm.

"Constitué essentiellement de PO" signifie que là majeure partie de la résistance à la pression est due à la PO.

Par PA, on entend les polymères et copolymères comprenant les liaisons amides dans leurs chaînes et qui peuvent être obtenus notamment par polycondensation. A titre d'exemple de PA, on peut citer les PA-6, PA-4,6, PA-11, PA-12, PA-6,12, PA-12,12 ainsi que les élastomères thermoplastiques à base PA, seuls en mélanges et/ou copolymérisés. On entend également les mélanges de PA et de polyoléfine(s) à matrice polyamide l-e dont la ou les polyoléfines sont dispersées dans cette matrice de polyamide, ces polyoléfines sont telles que définies précédemment. La quantité de polyamide formant la matrice est en général comprise entre 55 et 95 parties en poids pour 5 à 45 parties de polyoléfine.

Les polyoléfines urtilisées sont avantageusement choisies parmi :
- le polyéthylène et les copolymères d'éthylène et d'une α-oléfine,
- les copolymères de l'éthylène / d'au moins un (méth)acrylate d'alkyle,
- les copolymères de l'éthylène / d'au moins un (méth)acrylate d'alkyle / de l'anhydride maléique, l'anhydride maléique étant greffé ou copolymérisé,
- les copolymères de l'éthylène / d'au moins un (méth)acrylate d'alkyle / de méthacrylate de glycidyle (MAGLY), le MAGLY étant greffé ou copolymérisé,
- le polypropylène.

Il est recommandé, pour faciliter la formation de la matrice de polyamide et si les polyoléfines ont peu ou pas de fonctions pouvant faciliter la compatibilisation, d'ajouter un agent compatibilisant.

A titre d'exemple d'agent compatibilisant, on peut citer:
- les copolymères éthylène / acide (méth)acrylique éventuellement neutralisés ;
- le polyéthylène, le polypropylène, les copolymères éthylène propylène, les copolymères de l'éthylène et d'une alphaoléfine, tous ces produits étant greffés par de l'anhydride maléique (AM) ou du méthacrylate de glycidyle.
- les copolymères éthylène / (méth)acrylate d'alkyle / AM, l'AM étant greffé ou copolymérisé,
- les copolymères éthylène / acétate de vinyle / AM, l'anhydride maléique étant greffé ou copolymérisé,
- les deux copolymères précédents dans lesquels l'anhydride maléique est remplacé par le MAGLY,
- le polyéthylène, le propylène ou les copolymères éthylène / propylène, ces polymères étant greffés par un produit présentant un site réactif avec les amines puis condensés avec des polyamides ou des oligoamides ayant une seule extrémité amine.

Ces produits sont notamment décrits dans les brevets FR2.291.225 et EP342.066.

La quantité de compatibilisant est la quantité suffisante pour que la PO se disperse sous forme de nodules dans la matrice polyamide. Elle peut représenter jusqu'à 20 % du poids de polyoléfine(s). On fabrique ces mélanges de polyamide, de polyoléfine(s) et éventuellement de compatibilisant selon les techniques usuelles de mélangeage.

Dans le cas du polypropylène, on ajoute un comptabilisant qui est avantageusement un copolymère éthylène / propylène majoritaire en nombre de motifs propylène, greffé par l'anhydride maléique, puis éventuellement condensé ensuite avec des oligomères mono aminés de caprolactame. De tels mélanges de polyamide et de polypropylène sont décrits dans le brevet US 5 342 886.

Parmi les PA, on utilise de préférence les PA-12 et PA-11 de viscosité inhérente dans le métacrésol comprise entre 1,3 et 1,6. L'épaisseur de la couche de PA qui dépend des contraintes mécaniques est en général comprise entre 50 µm et 3 mm.

On désigne par liant tout produit qui permet au PA d'adhérer sur la PO. On peut utiliser tous les produits connus comme liants de coextrusion des polyamides et des polyoléfines.

A titre d'exemples de liants, on peut citer :
- le polyéthylène, le polypropylène, les copolymères de l'éthylène et d'au moins une α-oléfine, des mélanges de ces polymères, greffés par des anhydrides d'acides carboxyliques insaturés tels que l'anhydride maléique ou des époxydes insaturés tels que le méthacrylate de glycidyle.
- les copolymères de l'éthylène avec au moins un produit choisi parmi (i) les acides carboxyliques insaturés, leurs sels, leurs esters, (ii) les esters vinyliques d'acides carboxyliques saturés, (iii) les acides dicarboxyliques insaturés, leurs sels, leurs esters, leurs hémiesters, leurs anhydrides (iv) les époxydes insaturés ; les monomères (i) à (iv) étant greffés ou copolymérisés.

On peut aussi utiliser des mélanges de ces polymères greffés et des polymères non greffés.

A titre d'exemples de liants particulièrement avantageux, on peut citer:
- le polyéthylène, le polypropylène ou les copolymères de l'éthylène et d'au moins une α-oléfine, greffés par de l'anhydride maléique et éventuellement mélangés avec d'autres copolymères de l'éthylène ou du propylène;
- les copolymères de l'éthylène et d'un (méth)acrylate d'alkyle ou de l'acétate de vinyle greffés ou copolymérisés avec de l'anhydride maléique ou du (méth)acrylate de glycidyle, éventuellement mélangés avec du polyéthylène ou des copolymères de l'éthylène ;
- les copolymères de l'éthylène et de l'acide (méth)acrylique partiellement neutralisé par des métaux.

L'épaisseur de la couche de liant est en général comprise entre 5 et 150 µm.

Selon une seconde forme avantageuse du premier objet de l'invention, la canalisation comprend une couche externe en PA et une couche interne en PE et elle est caractérisée en ce qu'au moins l'une des deux couches contient un produit qui permet l'adhésion du PA et du PE. Ce produit peut être par exemple un ou plusieurs liants décrits plus haut. Selon cette seconde forme avantageuse, il suffit de le mélanger au PA ou à la PO, mais on préfère l'incorporer au PA.

Les canalisations de l'invention ont en général des diamètres extérieurs compris entre 12 à 300 mm. L'épaisseur de la couche extérieure de PA est avantageusement comprise entre 200 µm et quelques mm, et est de préférence comprise 250 µm et 1 mm.

Ci-dessous sont répertoriées les pressions d'éclatement à 23°C des canalisations d'épaisseurs diverses réalisées à partir de PA-11 Jaune et de PEMD sous la dénomination FINATHENE® PE3802 (Tableau 1) et réalisées à partir de PA-12 sous la dénomination RILSAN® AESNO TL et de PEHD LACQTENE® 1002 TN22 (Tableau 2) ; pour chacune des canalisations testées, les couches de PA et PE sont reliées par une couche de liant d'adhésion d'environ 100 µm qui est un copolymère de PEHD modifié notamment par greffage d'anhydride maléique (densité 0,939 g/cm3 ; de Melt Index mesuré selon la norme ASTM D1238 à 190°C sous charge de 2,16 kg = 0,2 g/10 min).

**Tableau 1**

| PE FINATHENE (épaisseur en mm) | PA-11 Jaune (épaisseur en mm) | pression d'éclatement (MPa) |
|---|---|---|
| 0 | 3 | 8,8 |
| 1,675 | 1,475 | 6,9 |
| 2,1 | 1,025 | 6,3 |
| 2,55 | 0,525 | 5,6 |
| 3 | 0 | 4,9 |
| tubes en PA-11/liant/PEHD - diamètres interne et externe : 26 x 32 mm | | |

**Tableau 2**

| PE LACQTENE (épaisseur en mm) | PA-12 AESNOTL (épaisseur en mm) | pression d'éclatement (MPa) |
|---|---|---|
| 0 | 5,7 | 9,3 |
| 4,7 | 1 | 5,4 |
| 5,7 | 0 | 4,7 |
| tubes en PA-12/liant/PEHD - diamètre externe 63 mm, SDR 11 | | |

Dans le Tableau 3, on compare la force d'enroulement nécessaire pour imposer à des canalisations en PA, en PE et en PA/liant/PE de diamètre extérieur 32 mm et de SDR = 11 (32x3), un rayon de courbure de 535 mm.

Le tube selon l'invention est constitué d'une couche extérieure d'épaisseur 0,5 mm en PA, une couche de liant de 0,1 mm et d'une couche de PE d'épaisseur2,4 mm.

**Tableau 3**

| Nature canalisation | Force d'enroulement (N) |
|---|---|
| PA | 915 |
| PE80 | 385 |
| PAext/Iiant/PEint | 425 |

En utilisant les canalisations selon l'invention, on peut donc établir de plus grandes longueurs et limiter voire éviter les raccords. Bien qu'on puisse utiliser tout type de raccord tel que par exemple ceux décrits dans EP 457.57 et EP 204.445, on préfère utiliser des manchons collés. Dans ce cas, on utilise une canalisation en PA dont le diamètre intérieur est essentiellement le même que le diamètre extérieur des canalisations à raccorder et de longueur comprise par exemple entre 0,04 et 0,5m. Des colles particulièrement adaptées ont été décrites dans EP 445.181. Les canalisations en PE de l'art antérieur ne peuvent être raccordées que par fusion bout à bout ou par manchons électrosoudables. La fusion bout à bout est difficile à mettre en oeuvre sur un chantier et plus particulièrement pour les petits diamètres. Les manchons électrosoudables sont des tubes dé diamètre intérieur sensiblement égal au diamètre extérieur des canalisations à raccorder. Dans ces manchons, sont noyées des résistances électriques et il suffit d'une source de courant pour provoquer la fusion et la soudure. L'inconvénient des manchons électrosoudables est la surépaisseur qu'ils engendrent par rapport au diamètre externe de la canalisation proprement dite, notamment quand ces canalisations soudées sont glissées dans les tuyaux d'un réseau existant. Les manchons épais imposent d'utiliser des canalisations de gaz de diamètre extérieur plus faible donc, finalement de diamètre interne plus faible, ce qui limite finalement le débit de gaz dans la canalisation. Les manchons en PA collés sont de faible épaisseur et présentent donc un encombrement beaucoup plus faible que les manchons électrosoudables. Ils sont particulièrement adaptés à la rénovation de réseaux de gaz déjà existants. En effet, dans ce type d'utilisation où le diamètre extérieur des canalisations est strictement limité, on peut utiliser des canalisations à base de PA et de PO de l'invention de diamètre plus important que des canalisations de PE de l'art antérieur. A titre d'exemple, pour une canalisation de diamètre externe 32 mm avec une couche externe de PA selon l'invention, un manchon collé en PA de 3 mm convient, alors que pour une canalisation de même diamètre externe en PE, un manchon électrosoudable de 4,5 mm est nécessaire. Pour une canalisation de diamètre externe 63 mm avec une couche externe de PA selon l'invention, un manchon collé en PA de 4,5 mm convient, alors que pour une canalisation de même diamètre externe en PE, un manchon électrosoudable de 9 mm est nécessaire..

Les canalisations selon l'invention qui ont une couche externe en PA sont moins sensibles aux rayures qui, peuvent par exemple se produire lors des opérations de stockage, de transport ou d'installation sur le site que les canalisations en PE. Or les rayures sont souvent à l'origine d'amorce de rupture. Un essai dérivé de la méthode du PENT test du Dr N. Brown - Univ. Of Pennsylvannia montre que le PA-11 Jaune ne présente pas de propagation de fissures à 80°C sous 7,4 MPa après 10.000 minutes.

Bien que ne présentant pas les avantages des canalisations selon l'invention ayant une couche extérieure en PA et une couche intérieure en PO, elles présentent néanmoins l'avantage, par rapport aux canalisations en PE, de résister aux condensats de gaz et d'être moins perméables au méthane, principal composé du gaz naturel.

La perméabilité au CH₄du PA-11 est de 0,0022 mm³/jour/atm, celle du PE80 est de 0,07 mm3/jour/atm et celle d'un tube PE80/liant/PA-11 (épaisseur 0,5/0,1/2,4 mm)est de 0,011 mm3/jour/atm.

Le procédé de fabrication des canalisations décrites ci-dessus consiste à coextruder les différentes couches simultanément. En particulier, la canalisation particulièrement préférée à 5 couches PA/liant/PE/liant/PA dans laquelle les 2 couches dé PA sont de composition identiques est préparée par coextrusion avec seulement 3 extrudeuses par division de flux.

## Revendications

1. Utilisation de canalisations constituées,
soit d'une couche intérieure de PO, de préférence de PE, et d'une couche extérieure en PA ou en mélange de PA et PO à matrice PA,
soit d'une couche extérieure de PO, de préférence de PE, et comprenant une couche intérieure en PA ou en mélange de PA et PO à matrice PA,
soit successivement d'une couche intérieure en PA ou en mélange de PA et PO à matrice PA, d'une couche en PO et d'une couche extérieure en PA ou en mélange de PA et PO à matrice PA,
pour constituer des réseaux de distribution et/ou de transport de gaz combustibles de moyenne et/ou basse pression.

2. Utilisation selon la revendication 1 telle que dans les canalisations une couche de liant est disposée entre la couche de PO et chaque couche de PA ou de mélange PA et PO à matrice PA.

3. Utilisation selon la revendication 1 telle que dans les canalisations la couche de PO et/ou une ou chaque couche adjacente de PA ou de mélange PA et PO à matrice PA contient un produit permettant l'adhésion des couches entre elles.

## Claims

1. Use of pipes consisting of:
- either a PO, preferably PE, inner layer and an outer layer made of PA or a PA/PO blend having a PA matrix;
- or a PO, preferably PE, outer layer and comprising an inner layer made of PA or a PA/PO blend having a PA matrix;
- or, in succession, an inner layer made of PA or a PA/PO blend having a PA matrix, a layer made of PO and an outer layer made of PA or a PA/PO blend having a PA matrix,
for forming medium-pressure and/or low-pressure combustible gas distribution and/or transport networks.

2. Use according to Claim 1 such that, in the pipes, a tie layer is placed between the PO layer and each layer of PA or PA/PO blend having a PA matrix.

3. Use according to Claim 1 such that, in the pipes, the PO layer and/or one or each adjacent layer of PA or a PA/PO blend having a PA matrix contain/contains a product allowing mutual adhesion of the layers.

## Patentansprüche

1. Verwendung von Rohrleitungen, die
entweder aus einer inneren Schicht aus PO und vorzugsweise PE und einer äußeren Schicht aus PA oder einem Gemisch von PA und PO mit PA-Matrix bestehen,
oder aus einer äußeren Schicht aus PO und vorzugsweise PE bestehen und eine innere Schicht aus PA oder einem Gemisch von PA und PO mit PA-Matrix aufweisen,
oder aus folgenden aufeinanderfolgenden Schichten bestehen: einer inneren Schicht aus PA oder einem Gemisch von PA und PO mit Polymermatrix, einer Schicht aus PO und einer äußeren Schicht aus PA oder einem Gemisch von PA und PO mit PA-Matrix,
um Netze zur Verteilung und/oder zum Transport von Brenngas mittleren und/oder niedrigen Drucks aufzubauen.

2. Verwendung nach Anspruch 1, wobei in den Rohrleitungen eine Bindemittelschicht zwischen der PO-Schicht und jeder Schicht aus PA oder einem Gemisch von PA und PO mit PA-Matrix vorgesehen ist.

3. Verwendung nach Anspruch 1, wobei in den Rohrleitungen die PO-Schicht und/oder eine oder alle angrenzenden Schichten aus PA oder einem Gemisch von PA und PO mit PA-Matrix ein Produkt enthalten, das die Haftung der Schichten aneinander gewährleistet.
